# EUROPÄISCHE PATENTSCHRIFT

(11) **EP 2 177 778 B1**
(45) Veröffentlichungstag und Bekanntmachung des Hinweises auf die Patenterteilung: **31.08.2011**
(21) Anmeldenummer: 09012128.6
(22) Anmeldetag: 24.09.2009
(51) Int. Cl.: F16C 35/02, F16C 35/04, F16C 35/067

(54) **Lageraufnahme in einem Lagerschild**
Bearing holder in a bearing shield
Réception de palier dans une flasque

(30) Priorität: 15.10.2008 DE 102008053568
(43) Veröffentlichungstag der Anmeldung: 21.04.2010
(73) Patentinhaber: Bühler Motor GmbH, 90459 Nürnberg (DE)
(72) Erfinder: Guttenberger, Richard, Obermässing 91171 Greding (DE)

(56) Entgegenhaltungen:
- GB-A- 2 296 297
- US-A- 5 931 585
- US-A1- 2005 239 591
- US-A1- 2006 088 373

## Beschreibung

Die Erfindung betrifft eine Lageraufnahme (2) in einem Lagerschild (1) mit einem Anbauteil (24) und mit einem Lager (5, 5a, 5b) mit zylindrischer Außenkontur, in dem eine Welle gelagert ist und das Lager (5, 5a, 5b) in der Lageraufnahme (2) des Lagerschildes (1) formschlüssig gehalten ist, wobei der Formschluss auf der dem Anbauteil (24) zugewandten Seite des Lagerschildes (1) durch zumindest einen urgeformten nach innen vorspringenden Aufnahmebereich (3) der Lageraufnahme (2) gebildet ist, an der zumindest ein Stirnseitenbereich des Lagers (5, 5a, 5b) anliegt.

Aus der DE 39 13 176 ist eine formschlüssige Lageraufnahme gemäß obiger Gattung bekannt. Aufgrund des Formschlusses ist das Lager auf seiner Außenseite vollständig vom Lagerschildmaterial umgeben und kann deshalb nicht als Zentrierfläche dienen.

Die US 5,931,585 weist eine Lageraufnahme auf, die auf ihrem das Lager umgebenden Bereich Aussparungen aufweist, durch welche die Außenkontur des Lagers teilweise frei zugänglich ist.

Die US 2006/088373 A1 zeigt ein Lagerbauteil mit drei Durchmesserbereichen, das formschlüssig in einer Lageraufnahme befestigt ist, wobei ein ringförmiger Bereich des Lagerbauteils frei zugänglich ist.

Aufgabe der vorliegenden Erfindung ist es daher bei einer gattungsgemäßen Lageraufnahme für eine stabile Festlegung des Lagers im Lagerschild zu sorgen, wobei keine Nachbearbeitungsschritte benötigt werden um Anbauteile exakt positionieren und fügen zu können.

Diese Aufgabe wird erfindungsgemäß dadurch die kennzeichnenden Merkmale des Anspruchs 1 gelöst. Hierdurch kann auf wirtschaftliche Weise eine dauerhaft feste Verbindung zwischen der Lageraussenkontur und dem Kunststofflagerschild hergestellt und eine genaue Lagezuordnung des Anbauteils erreicht werden. Durch den Urformprozess ist der formschlüssige Aufnahmebereich (3) bereits hergestellt, so dass keine zusätzlichen Fertigungsschritte erforderlich sind.

Weiterbildungen der Erfindung werden anhand der Unteransprüche dargestellt.
Es ist vorgesehen dass die Lageraufnahme (2) aus der Lagerschildebene in Axialrichtung in Form eines Ringes (6) vorspringt. Dieser Ring muss ein ausreichendes Volumen besitzen um das Lager nach seiner Festlegung ausreichend festhalten zu können.

Um eine große Verwindungssteifigkeit zu erreichen ist die Höhe des Ringes (6) zwischen der Lagerschildebene (20) und dem äußersten Rand des Ringes (6) deutlich geringer als die Höhe der Lageraufnahme (2) zwischen einem Aufnahmeboden und dem äußersten Rand des Ringes (6). Dadurch liegen große Anteile der Außenkontur des Lagers an Bereichen der Aufnahme an, die in der Lagerschildebene liegen und somit von Lagerschildmaterial umgeben sind.

Der Ring weist in einer Weiterbildung der Erfindung Freisparungen (12) auf, so dass ein Teil der Außenkontur des Lagers freiliegt. Die freiliegenden Bereiche bilden Zentrierflächen für Anbauteile. Es genügt drei Aussparungen (12) vorzusehen, um eine ausreichende Festigkeit der Lageraufnahme 4 zu erreichen und um die Komplexität des Lagerschilds in Grenzen zu halten.

Um eine große Stabilität der Verbindung sicherzustellen, sollten die die Freisparungen (12) einen möglichst geringen Anteil am Ringumfang einnehmen. Dieser Anteil ist abhängig von den Abmessungen und Wandstärken der Lageraufnahme. Andererseits soll auch für die Zentrierung des Anbauteils ausreichend Aufnahmefläche vorhanden sein, deshalb ist vorgesehen, dass die Winkelsumme welche die Freisparungen (12) am Umfang des Ringes (6) einnehmen ungefähr die gleiche Größe aufweist, wie die Winkelsumme der verbleibenden Ringsegmente.

Um die Auflagefläche für eine Aufnahme des Anbauteils zu vergrößern, erstrecken sich die Freisparungen (12) über die äußere Lagerschildebene hinaus in das Lagerschildmaterial hinein. Diese Maßnahme kann weitergeführt werden, bis sich die Freisparungen (12) über die äußere Lagerschildebene (20) hinaus erstrecken und Durchbrüche im Lagerschild (1) bilden.

Bei einer zweiten Ausführungsform der Erfindung weist das Lager (5) eine gestufte Außenkontur auf, mit einem dem Anbauteil zugewandten und für dessen Aufnahme vorgesehenen ersten zylindrischen Abschnitt und einem zweiten, die formschlüssige Verbindung in axialer Richtung herstellenden, zylindrischen Abschnitt mit größerem Außendurchmesser. Dabei ist weiter vorgesehen, dass die Stirnseite des durchmessergrößeren zweiten zylindrischen Abschnitts des Lagers (5) an den nach innen vorspringenden Aufnahmebereich (3) der Lageraufnahme (2) anliegt und dass der nach innen vorspringenden Aufnahmebereich (3) einen geschlossenen Ring bildet. Durch den geschlossenen Ring ist eine besonders gute Zentrierung und großflächige Aufnahme des Anbauteils möglich.

Es sind unterschiedliche Möglichkeiten bekannt den Formschluss auf der dem Anbauteil abgewandten Seite des Lagerschildes auszubilden, z.B. kann er durch ein Befestigungsmittel gebildet sein.

Als erprobtes Befestigungsmittel für das Lager (5) kann eine Schraube (19) verwendet werden, die mit ihrem Schraubenkopf unmittelbar am Lager anliegt und mit dem Lagerschild (1) verschraubt ist. Bei Verwendung dreier Schrauben, die um den Umfang des Lagers (5) herum angeordnet ist, ist eine gute Festigkeit der Verbindung gegeben.

Es genügt Schrauben als einziges Befestigungselement zu verwenden, es kann aber auch sinnvoll sein ein Halteblech zwischen dem Lager und einer Schraube (19) anzuordnen, insbesondere, wenn das Halteblech elastisch federnd ausgeführt ist. Hierdurch ist Spielfreiheit des Lagers (5) in der Lageraufnahme (2) gewährleistet.

Um die Anzahl der zu montierenden Schrauben zu verringern, kann das Halteblech auf zumindest einer Seite in eine Hinterschneidung oder einen Vorsprung eingeführt sein, so dass nur noch auf der gegenüberliegenden Seite eine Schraube zur Befestigung des Halteblechs erforderlich ist.

Durch Verwendung eines Halteblechs in Form einer Klemmscheibe wird die Handhabung vereinfacht und für eine gleichmäßigere Haltekraft am Lageraussenring und für eine schnelle Montage gesorgt.

Der Formschluss auf der dem Anbauteil abgewandten Seite des Lagerschildes kann auch durch Umformen des Lagerschildmaterials, z.B. durch Taumelnieten gebildet sein.

Das Lager (5) kann sowohl ein Wälzlager als auch ein Gleitlager mit zylindrischer Außenkontur sein, wobei das Lager (5) mit der Welle fest verbunden ist.

Das Lager wird bei allen Ausführungsformen von der dem Anbauteil (24) abgewandten Seite des Lagerschilds (1) aus montiert. In vorteilhafter Weise wird das Lager in die Lageraufnahme zusätzlich eingepresst, wodurch die Verbindung größere Festigkeit erhält und die Montagesicherheit für folgende Montageprozesse erhöht ist. Je nach Lagerschildmaterial und Einsatzbedingungen kann das Lager mit oder ohne Befestigungsmittel befestigt werden. Bei Kunststofflagerschilden sollte das Lager mit gesichert werden. Die Sicherung kann auch durch einen Heißumformprozess gebildet sein.

Das Lagerschildmaterial kann aus Kunststoffmaterial oder aus Leichtmetall oder einer Leichtmetalllegierung bestehen.

Die Erfindung wird nachfolgend anhand eines Ausführungsbeispieles näher erläutert. Es zeigt:
Fig. 1 eine erste Ausführungsform einer erfindungsgemäßen Lageraufnahme,
Fig. 2a eine zweite Ausführungsform der erfindungsgemäßen Lageraufnahme,
Fig. 2b eine Variante der zweiten Ausführungsform,
Fig. 3 eine erste Lagerbefestigung,
Fig. 4a eine zweite Lagerbefestigung,
Fig. 4b eine Variante von Fig. 3a und
Fig. 5 ein Anbauteil.

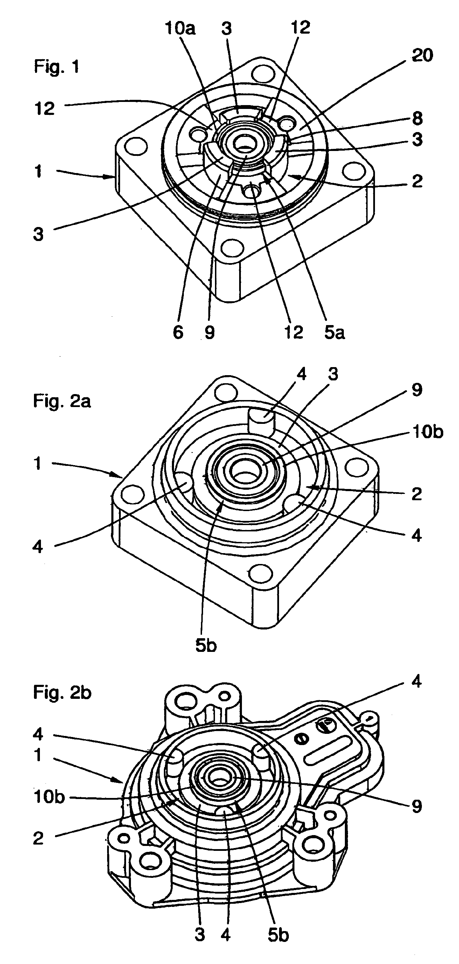

Fig. 1 zeigt eine erste Ausführungsform einer erfindungsgemäßen Lageraufnahme 2 in einem Lagerschild 1 eines Stellantriebs, mit einem aus der Lagerschildebene 20 vorspringenden Ring 6, der einen Teil der Lageraufnahme 2 bildet. Die Höhe des Ringes 6 zwischen seinem äußeren Rand 8 und der Lagerschildebene 20 ist geringer als die Höhe eines Lagers 5a, das durch die Lageraufnahme 2 aufgenommen ist. Das Lager 5a taucht demnach teilweise in die Lagerschildebene 20 ein und ist dort vollumfänglich von Kunststoffmaterial umgeben. Im Bereich des Ringes 6 sind Freisparungen 12 vorgesehen, die den Ring 6 in mehrere Segmente teilt. Im gezeigten Beispiel sind drei Freisparungen 12 und drei Ringsegmente vorgesehen. Die Freisparungen 12 legen drei radiale Außenbereiche der Zylindermantelfläche des Lagers 5a frei, die als Zentrierflächen für ein Anbauteil dienen, das entsprechend komplementär gestaltet sein muss. Das Lager 5a kann ein Wälzlager oder ein Gleitlager sein, wobei jeweils eine zylindrische Außenkontur vorhanden sein soll. Die Ringsegmente des Ringes 6 weisen an ihren axialen Enden radial nach innen vorspringende Aufnahmebereiche 3 auf, an denen das Lager 5a mit seiner äußeren Stirnseite formschlüssig anliegt. Im vorliegenden Beispiel ist ein Wälzlager dargestellt.

Die Fig. 2a und 2b zeigen eine zweite Ausführungsform der Lageraufnahme 2 in einem Lagerschild 1, wobei das Lager 5b ein Wälzlager ist und einen gestuften Außenring 10b mit einem ersten zylindrischen Bereich kleineren Außendurchmessers und einen zweiten zylindrischen Bereich größeren Außendurchmessers aufweist. Die Stirnseite des durchmessergrößeren Bereichs dient als Anlagefläche an den Aufnahmebereich 3 der Lageraufnahme 2. Der Aufnahmebereich 3 ist ringförmig und ragt über die Stirnseite des durchmessergrößeren Bereichs des Wälzlageraußenringes 10b radial nach innen vor und bildet in axialer Richtung eine Gegenanlagefläche und hält das Lager 5b formschlüssig. Der Aufnahmebereich 3 ist einstückig mit dem Lagerschild und durch Urformen hergestellt. Bei der zweiten Ausführungsform steht ein geschlossener Ringbereich des Außenringes 9 des Lagers 5b als Zentrier- und Aufnahmemittel für ein Anbauteil mit komplementärer Geometrie zur Verfügung. Eine Variante nach Fig. 2a zeigt ein Leichtmetalllagerschild, eine weitere Variante nach Fig. 2b ein Kunststofflagerschild. Beide Lagerschilde sind durch Urformen hergestellt.

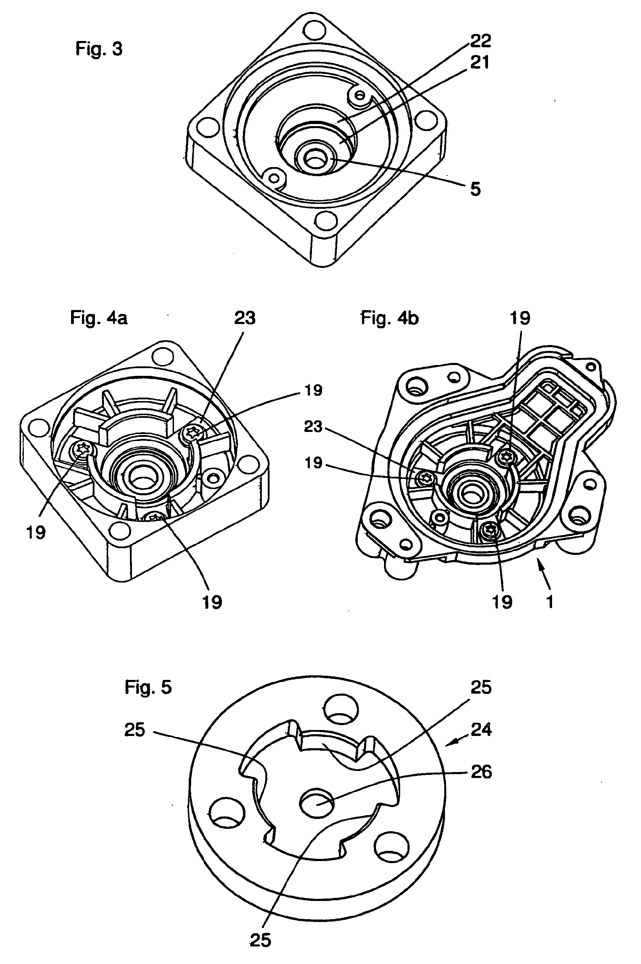

Fig. 3 zeigt auf der dem Anbauteil abgewandten Seite des Lagerschildes 1 eine erste Lagerbefestigung eines Lagers 5 durch eine Klemmscheibe 21, die sich an einer zylindrischen Innenkontur einer Lageraufnahme 2 festkrallt.

Die Fig. 4a und 4b zeigen eine zweite Lagerbefestigung des Lagers 5 auf der dem Anbauteil abgewandten Seite des Lagerschildes 1, wobei ein Halteblech 23, das eine zentrale kreisförmige Freisparung aufweist, deren Durchmesser geringer ist als der Außendurchmesser des Lagers 5 mit jeweils drei Schrauben 19 am Lagerschild 1 befestigt ist, wodurch das Lager 5 formschlüssig am Lagerschild 1 gehalten ist. Das Halteblech weist im dargestellten Beispiel drei radial nach außen ragende Befestigungslappen auf, welche in korrespondierende Konturen des Lagerschildes 1 eingelegt und dort mit dem Lagerschild 1 verschraubt sind. Die Länge der Befestigungslappen beeinflussen die Nachgiebigkeit der Befestigung. Das Lagerschild 1 gemäß Fig. 4a besteht aus Leichtmetall, das Lagerschild 1 gemäß Fig. 4b besteht aus Kunststoffmaterial.

Fig. 5b zeigt ein Anbauteil, das eine zum ersten Ausführungsbeispiel komplementäre Innenkontur 25 und eine Wellendurchführung 26 aufweist.

### Bezugszeichenliste

- 1: Lagerschild
- 2: Lageraufnahme
- 3: Aufnahmebereich
- 4: Anschraubbuchse
- 5: Lager
- 5a: Lager
- 5b: Lager
- 6: Ring
- 8: Rand
- 9: Innenring
- 10a: Außenring
- 10b: Außenring
- 12: Freisparung
- 19: Schraube
- 20: Lagerschildebene
- 21: Klemmscheibe
- 22: Innenkontur
- 23: Halteblech
- 24: Anbauteil
- 25: Innenkontur
- 26: Wellendurchführung

## Patentansprüche

1. Lageraufnahme (2) in einem Lagerschild (1) mit einem Anbauteil (24) und mit einem Lager (5, 5a, 5b) mit zylindrischer Außenkontur, in dem eine Welle gelagert ist und das Lager (5, 5a, 5b) in der Lageraufnahme (2) des Lagerschildes (1) formschlüssig gehalten ist, wobei der Formschluss auf der dem Anbauteil (24) zugewandten Seite des Lagerschildes (1) durch zumindest einen urgeformten nach innen vorspringenden Aufnahmebereich (3) der Lageraufnahme (2) gebildet ist, an der zumindest ein Stirnseitenbereich des Lagers (5, 5a, 5b) anliegt, **dadurch gekennzeichnet, dass** das Anbauteil (24) zumindest auf einem Bereich einer zylindrischen Außenkontur des Lagers (5, 5a, 5b) aufgenommen und zentriert ist.

2. Lageraufnahme nach Anspruch 1, **dadurch gekennzeichnet, dass** die Lageraufnahme (2) aus der Lagerschildebene (20) in Axialrichtung vorspringt und in der Grundform einen Ring (6) bildet.

3. Lageraufnahme nach Anspruch 2, **dadurch gekennzeichnet, dass** die Höhe des Ringes (6) zwischen der Lagerschildebene (20) und dem äußersten Rand (8) des Ringes (6) deutlich geringer ist als die Höhe der Lageraufnahme (2) zwischen einem Aufnahmeboden und dem äußersten Rand (8) des Ringes (6).

4. Lageraufnahme nach Anspruch 3, **dadurch gekennzeichnet, dass** der Ring (6) Freisparungen (12) aufweist, so dass mehrere Bereiche der Außenkontur des Lagers (5, 5a) freiliegen.

5. Lageraufnahme nach Anspruch 4, **dadurch gekennzeichnet, dass** sich die Freisparungen (12) vom äußersten Rand des Ringes (6) aus in Richtung auf die Lagerschildebene (20) erstrecken.

6. Lageraufnahme nach Anspruch 4 oder 5, **dadurch gekennzeichnet, dass** die Winkelsumme der Freisparungen (12) am Umfang des Ringes (6) ungefähr so groß ist, wie die Winkelsumme der verbleibenden Ringsegmente.

7. Lageraufnahme nach Anspruch 4, 5 oder 6, **dadurch gekennzeichnet, dass** drei Freisparungen (12) vorgesehen sind, die sich gleichmäßig am Umfang des Ringes (6) verteilen.

8. Lageraufnahme nach zumindest einem der Ansprüche 4, 5, 6 oder 7 , **dadurch gekennzeichnet, dass** sich die Freisparungen (12) über die äußere Lagerschildebene (20) hinaus in das Lagerschildmaterial hinein erstrecken.

9. Lageraufnahme nach zumindest einem der Ansprüche 4, 5, 6 oder 7, **dadurch gekennzeichnet, dass** sich die Freisparungen (12) über die äußere Lagerschildebene (20) hinaus erstrecken und Durchbrüche im Lagerschild (1) bilden.

10. Lageraufnahme nach Anspruch 1, **dadurch gekennzeichnet, dass** das Lager (5, 5b) eine gestufte Außenkontur aufweist, mit einem dem Anbauteil zugewandten und für dessen Aufnahme vorgesehenen ersten zylindrischen Abschnitt und einem zweiten, die formschlüssige Verbindung in axialer Richtung herstellenden, zylindrischen Abschnitt mit größerem Außendurchmesser.

11. Lageraufnahme nach Anspruch 10, **dadurch gekennzeichnet, dass** die Stirnseite des durchmessergrößeren zweiten zylindrischen Abschnitts des Lagers (5, 5b) an den nach innen vorspringenden Aufnahmebereich (3) der Lageraufnahme (2) anliegt.

12. Lageraufnahme nach Anspruch 11, **dadurch gekennzeichnet, dass** der nach innen vorspringenden Aufnahmebereich (3) einen geschlossenen Ring bildet.

13. Lageraufnahme nach zumindest einem der vorangehenden Ansprüche, **dadurch gekennzeichnet, dass** auf der dem Anbauteil (24) abgewandten Seite des Lagerschildes (1) durch ein Befestigungsmittel ein Formschluss gebildet ist.

14. Lageraufnahme nach Anspruch 13, **dadurch gekennzeichnet, dass** das Befestigungsmittel eine Schraube (19) ist, die mit ihrem Schraubenkopf unmittelbar am Lager anliegt und mit dem Lagerschild (1) verschraubt ist.

15. Lageraufnahme nach Anspruch 14, **dadurch gekennzeichnet, dass** drei Schrauben (19) vorgesehen sind, die um den Umfang des Lagers (5, 5a, 5b) herum angeordnet sind.

16. Lageraufnahme nach Anspruch 14 oder 15, **dadurch gekennzeichnet, dass** ein Halteblech (23) zwischen dem Lager (5, 5a, 5b) und einer Schraube (19) angeordnet ist.

17. Lageraufnahme nach Anspruch 16, **dadurch gekennzeichnet, dass** das Halteblech (23) federnd ausgebildet ist.

18. Lageraufnahme nach Anspruch 16 oder 17, **dadurch gekennzeichnet, dass** das Halteblech (23) an zumindest einem Ende in eine Hinterschneidung oder in einen Vorsprung der der Lageraufnahme (2) eingreift.

19. Lageraufnahme nach Anspruch 13, **dadurch gekennzeichnet, dass** das Befestigungsmittel in Form einer Klemmscheibe (21) ausgebildet ist, die sich an einer Innenkontur (22) des Lagerschildes (1) oder der Lageraufnahme des Lagerschildes (1) festklemmt.

20. Lageraufnahme nach Anspruch 1, **dadurch gekennzeichnet, dass** auf der dem Anbauteil (24) abgewandten Seite des Lagerschildes (1) durch Umformen des Lagerschildmaterials, z.B. durch Taumelnieten, ein Formschluss des Lagers (5, 5a, 5b) in axialer Richtung gebildet ist.

21. Lageraufnahme nach zumindest einem der vorangehenden Ansprüche, **dadurch gekennzeichnet, dass** das Lager (5, 5a, 5b) mit der Welle fest verbunden ist.

22. Lageraufnahme nach zumindest einem der vorangehenden Ansprüche, **dadurch gekennzeichnet, dass** das Lager (5, 5a, 5b) ein Wälzlager oder ein Gleitlager ist.

23. Lageraufnahme nach zumindest einem der vorangehenden Ansprüche, **dadurch gekennzeichnet, dass** das Lager (5, 5a, 5b) in der Lageraufnahme (2) des Lagerschildes (1) eingepresst ist.

24. Lageraufnahme nach Anspruch 1, **dadurch gekennzeichnet, dass** auf der dem Anbauteil (24) abgewandten Seite des Lagerschildes (1) durch Heißumformung des Lagerschildmaterials ein Formschluss des Lagers (5, 5a, 5b) in axialer Richtung gebildet ist.

## Claims

1. A bearing holder (2) in a bearing plate (1), having an attachment part (24) and a bearing (5, 5a, 5b) of cylindrical external contour in which a shaft is borne and the bearing (5, 5a, 5b) is held form-fittingly in the bearing holder (2) of the bearing plate (1), wherein the form fit is created on the side of the bearing plate (1) that faces the attachment part (24) by at least one moulded, inwardly projecting receiving region (3) of the bearing holder (2), against which at least one end face region of the bearing (5, 5a, 5b) abuts, **characterised in that** the attachment part (24) is received and centred at least on a region of a cylindrical external contour of the bearing (5, 5a, 5b).

2. A bearing holder according to Claim 1, **characterised in that** the bearing holder (2) projects axially out of the plane (20) of the bearing plate and in its basic shape forms a ring (6).

3. A bearing holder according to Claim 2, **characterised in that** the height of the ring (6) between the plane (20) of the bearing plate and the outermost edge (8) of the ring (6) is markedly smaller than the height of the bearing plate (2) between a receiving base and the outermost edge (8) of the ring (6).

4. A bearing holder according to Claim 3, **characterised in that** the ring (6) includes recesses (12) such that a plurality of regions of the external contour of the bearing (5, 5a) are uncovered.

5. A bearing holder according to Claim 4, **characterised in that** the recesses (12) extend from the outermost edge of the ring (6) in the direction of the plane (20) of the bearing plate.

6. A bearing holder according to Claim 4 or 5, **characterised in that** the sum of the angles of the recesses (12) on the periphery of the ring (6) is of approximately the same magnitude as the sum of the angles of the remaining ring segments.

7. A bearing holder according to Claim 4, 5 or 6, **characterised in that** three recesses (12) are provided which are distributed evenly around the periphery of the ring (6).

8. A bearing holder according to at least one of Claims 4, 5, 6 or 7, **characterised in that** the recesses (12) extend beyond the outer plane (20) of the bearing plate into the material of the bearing plate.

9. A bearing holder according to at least one of Claims 4, 5, 6 or 7, **characterised in that** the recesses (12) extend beyond the outer plane (20) of the bearing plate and form apertures in the bearing plate (1).

10. A bearing holder according to Claim 1, **characterised in that** the bearing (5, 5b) has a stepped external contour, having a first cylindrical portion which faces the attachment part and is provided for receiving the latter and a second cylindrical portion of larger external diameter which creates the form-fitting connection in the axial direction.

11. A bearing holder according to Claim 10, **characterised in that** the end face of the second cylindrical portion of the bearing (5, 5b), which is of larger diameter, abuts against the inwardly projecting receiving region (3) of the bearing holder (2).

12. A bearing holder according to Claim 11, **characterised in that** the inwardly projecting receiving region (3) forms a closed ring.

13. A bearing holder according to at least one of the preceding claims, **characterised in that** a form fit is created by a securing means, on the side of the bearing plate (1) remote from the attachment part (24).

14. A bearing holder according to Claim 13, **characterised in that** the securing means is a screw (19) whereof the screw head abuts directly against the bearing and which is screwed to the bearing plate (1).

15. A bearing holder according to Claim 14, **characterised in that** three screws (19) are provided arranged around the periphery of the bearing (5, 5a, 5b).

16. A bearing holder according to Claim 14 or 15, **characterised in that** a retaining plate (23) is arranged between the bearing (5, 5a, 5b) and a screw (19).

17. A bearing holder according to Claim 16, **characterised in that** the retaining plate (23) is of resilient construction.

18. A bearing holder according to Claim 16 or 17, **characterised in that** the retaining plate (23) engages, at least at one end, in an undercut or a projection of the bearing holder (2).

19. A bearing holder according to Claim 13, **characterised in that** the securing means takes the form of a clamping disc (21) which is clamped firmly to an internal contour (22) of the bearing plate (1) or the bearing holder of the bearing plate (1).

20. A bearing holder according to Claim 1, **characterised in that** a form fit of the bearing (5, 5a, 5b) in the axial direction is created on the side of the bearing plate (1) remote from the attachment part (24) by the moulding of the bearing plate material, for example by wobble riveting.

21. A bearing holder according to at least one of the preceding claims, **characterised in that** the bearing (5, 5a, 5b) is firmly connected to the shaft.

22. A bearing holder according to at least one of the preceding claims, **characterised in that** the bearing (5, 5a, 5b) is a rolling bearing or a plain bearing.

23. A bearing holder according to at least one of the preceding claims, **characterised in that** the bearing (5, 5a, 5b) is pressed into the bearing holder (2) of the bearing plate (1).

24. A bearing holder according to Claim 1, **characterised in that** a form fit of the bearing (5, 5a, 5b) in the axial direction is created on the side of the bearing plate (1) remote from the attachment part (24) by hot moulding the material of the bearing plate.

## Revendications

1. Logement de réception de palier (2) dans un flasque de palier (1), comprenant une pièce annexe rapportée (24) et un palier (5, 5a, 5b) à contour extérieur cylindrique, dans lequel est monté un arbre, le palier (5, 5a, 5b) étant maintenu par arrêt mécanique positif dans le logement de réception de palier (2) du flasque de palier (1), et l'arrêt mécanique positif étant réalisé sur le côté du flasque de palier (1) dirigé vers la pièce annexe rapportée (24), par au moins une zone de logement de réception (3) du logement de réception de palier (2), moulée d'origine et faisant saillie vers l'intérieur, et contre laquelle s'appuie au moins une zone de face frontale du palier (5, 5a, 5b),
**caractérisé en ce que** la pièce annexe rapportée (24) est reçue et centrée sur une zone d'un contour cylindrique extérieur du palier (5, 5a, 5b).

2. Logement de réception de palier selon la revendication 1, **caractérisé en ce que** le logement de réception de palier (2) fait saillie du plan de flasque de palier (20) dans la direction axiale, et constitue un anneau (6) quant à sa forme de base.

3. Logement de réception de palier selon la revendication 2, **caractérisé en ce que** la hauteur de l'anneau (6) entre le plan de flasque de palier (20) et le bord (8) le plus extérieur de l'anneau (6) est nettement moindre que la hauteur du logement de réception de palier (2) entre un fond de logement de réception et le bord (8) le plus extérieur de l'anneau (6).

4. Logement de réception de palier selon la revendication 3, **caractérisé en ce que** l'anneau (6) présente des évidements de dégagement (12), de sorte que plusieurs zones du contour extérieur du palier (5, 5a) sont dégagées.

5. Logement de réception de palier selon la revendication 4, **caractérisé en ce que** les évidements de dégagement (12) s'étendent à partir du bord le plus extérieur de l'anneau (6), en direction du plan de flasque de palier (20).

6. Logement de réception de palier selon la revendication 4 ou la revendication 5, **caractérisé en ce que** la somme angulaire des évidements de dégagement (12) sur la périphérie de l'anneau (6), est environ aussi grande que la somme angulaire des segments d'anneau résiduels.

7. Logement de réception de palier selon la revendication 4, 5 ou la revendication 6, **caractérisé en ce que** sont prévus trois évidements de dégagement (12), qui se répartissent de manière régulière le long de la périphérie de l'anneau (6).

8. Logement de réception de palier selon l'une au moins des revendications 4, 5, 6 ou 7, **caractérisé en ce que** les évidements de dégagement (12) s'étendent au-delà du plan de flasque de palier (20) extérieur, jusqu'à l'intérieur du matériau du flasque de palier.

9. Logement de réception de palier selon l'une au moins des revendications 4, 5, 6 ou 7, **caractérisé en ce que** les évidements de dégagement (12) s'étendent au-delà du plan de flasque de palier (20) extérieur, et forment des évidements de passage traversant le flasque de palier (1).

10. Logement de réception de palier selon la revendication 1, **caractérisé en ce que** le palier (5, 5b) présente un contour extérieur étagé, avec un premier tronçon cylindrique dirigé vers la pièce annexe rapportée et prévu pour la réception de celle-ci, et un deuxième tronçon cylindrique de diamètre extérieur plus grand, qui réalise la liaison d'arrêt mécanique positif dans la direction axiale.

11. Logement de réception de palier selon la revendication 10, **caractérisé en ce que** la face frontale du deuxième tronçon cylindrique de diamètre plus grand du palier (5, 5b), s'appuie contre la zone de logement de réception (3) du logement de réception de palier (2) faisant saillie vers l'intérieur.

12. Logement de réception de palier selon la revendication 11, **caractérisé en ce que** la zone de logement de réception (3) faisant saillie vers l'intérieur, forme un anneau fermé.

13. Logement de réception de palier selon l'une au moins des revendications précédentes, **caractérisé en ce que** sur le côté du flasque de palier (1), opposé à celui où se trouve la pièce annexe rapportée (24), est réalisé un arrêt mécanique positif par un moyen de fixation.

14. Logement de réception de palier selon la revendication 13, **caractérisé en ce que** le moyen de fixation est une vis (19), qui s'appuie, avec sa tête de vis, directement contre le palier, et est vissée dans le flasque de palier (1).

15. Logement de réception de palier selon la revendication 14, **caractérisé en ce que** sont prévues trois vis (19), qui sont agencées autour de la périphérie du palier (5, 5a, 5b).

16. Logement de réception de palier selon la revendication 14 ou la revendication 15, **caractérisé en ce qu'**une tôle de maintien (23) est agencée entre le palier (5, 5a, 5b) et une vis (19).

17. Logement de réception de palier selon la revendication 16, **caractérisé en ce que** la tôle de maintien (23) est de configuration à élasticité de ressort.

18. Logement de réception de palier selon la revendication 16 ou la revendication 17, **caractérisé en ce que** la tôle de maintien (23) s'engage, à au moins une extrémité, dans une contre-dépouille ou une protubérance du logement de réception de palier (2).

19. Logement de réception de palier selon la revendication 13, **caractérisé en ce que** le moyen de fixation est réalisé sous la forme d'une rondelle de serrage (21), qui vient se serrer contre un contour intérieur (22) du flasque de palier (1) ou du logement de réception de palier du flasque de palier (1).

20. Logement de réception de palier selon la revendication 1, **caractérisé en ce que** sur le côté du flasque de palier (1), opposé à celui où se trouve la pièce annexe rapportée (24), est formé un arrêt mécanique positif du palier (5, 5a, 5b) dans la direction axiale, par déformation du matériau du flasque de palier, par exemple par rivetage par fluage radial.

21. Logement de réception de palier selon l'une au moins des revendications précédentes, **caractérisé en ce que** le palier (5, 5a, 5b) est lié de manière fixe à l'arbre.

22. Logement de réception de palier selon l'une au moins des revendications précédentes, **caractérisé en ce que** le palier (5, 5a, 5b) est un palier à roulement ou un palier lisse.

23. Logement de réception de palier selon l'une au moins des revendications précédentes, **caractérisé en ce que** le palier (5, 5a, 5b) est monté à force dans le logement de réception de palier (2) du flasque de palier (1).

24. Logement de réception de palier selon la revendication 1, **caractérisé en ce que** sur le côté du flasque de palier (1), opposé à celui où se trouve la pièce annexe rapportée (24), est formé un arrêt mécanique positif du palier (5, 5a, 5b) dans la direction axiale, par déformation à chaud du matériau du flasque de palier.
